# EUROPEAN PATENT SPECIFICATION

(11) **EP 2 668 753 B1**
(45) Date of publication and mention of the grant of the patent: **04.10.2017**
(21) Application number: 12700231.9
(22) Date of filing: 11.01.2012
(51) Int. Cl.: H04L 12/883, H04L 12/861

(54) **AN APPARATUS AND A METHOD FOR RECEIVING AND FORWARDING DATA PACKETS**
VORRICHTUNG UND VERFAHREN ZUM EMPFANGEN UND WEITERLEITEN VON DATENPAKETEN
APPAREIL ET PROCÉDÉ PERMETTANT DE RECEVOIR ET DE RÉACHEMINER DES PAQUETS DE DONNÉES

(30) Priority: 28.01.2011 US 201161437369 P
(43) Date of publication of application: 04.12.2013
(73) Proprietor: Napatech A/S, 2860 Søborg (DK)
(72) Inventor: KRAGH, Søren, DK-2500 Valby (DK); EKNER, Peter, DK-3400 Hillerød (DK)
(74) Representative: Inspicos P/S
(86) International application number: PCT/EP2012/050355
(87) International publication number: WO 2012/100984

(56) References cited:
- US-A1- 2005 207 423

## Description

The present invention relates to an apparatus and a method for receiving and forwarding data packets and in particular to receiving data packets on a plurality of separate adapters each forwarding the data packets on a common bus and to a common storage. Technology of this type may be seen in US2005/207423

In a first aspect, the invention relates to an apparatus according to claim 1.

In this context, a data packet may be any type of a data unit to be transmitted on or transported by a network, data cable, data bus, trunk, or the like. Normally, a data unit conforms to one or more data standards, such as the Ethernet standard being an umbrella under which a number of different standards or data packet types exist, such as UDP and TCP data packets. A data packet usually has a number of different information items or types, such as address data, payload or the like, which are each positioned at well defined or known positions within the data packet. Such positions and types will typically differ from data packet type to data packet type, but usually, the data packet type, and thus the positions of individual contents thereof, may be determined from the actual data packet, where after the individual data items, such as address data and/or payload, may be derived, altered, and/or used in the analysis. The type or standard may be derived directly from the data packet, such as when a particular data item of the packet identifies the type/standard, or may be derived from data derived from the data packet, such as on the basis of recognition of types and positions of data items of the data packet and subsequently determination of type(s) or standard(s) of data packet in which such data may be found at such position(s).

Data packets as received may be pre-ordered in a multiple of manners and for a number of reasons. Usually, data exchange between computers is a file transfer, TCP transfer, VoIP or the like, where the order of the individual packets is important. Usually, such transfers are called streams.

A stream of data packets normally is a sequence of data packets transmitted from a single transmitter to one or more receivers. These data packets relate to e.g. a single file or the like transmitted in smaller portions, being the payload of the packets. The transmitter and receiver, or any intermediate network elements, will usually then have addresses also represented in the packet. In addition, other stream identifying information may be present in the data packet, depending on the individual data packet standard.

Thus, a stream may be identified on the basis of e.g. the addresses and/or the stream identifying information, whereby, if used consistently, the same information may be derived, and any subsequent process may identify the stream merely from the information. In another situation, data packets may be provided with information therein determining the order thereof, such as a sequence number or a time stamp. Thus, this information may be used for ordering the packets.

It may be preferred that the receiving and forwarding elements are physically separate, whereby these may be removed or replaced if desired. In addition, more or fewer such elements may be provided in order to adapt the functionality and capabilities of the apparatus.

The controlling unit may be a separate circuit or may be connected to or even embodied in one of the receiving and forwarding elements. The remaining data receiving and forwarding elements may be identical.

Naturally, the data receiving and forwarding elements and the controlling unit may all be fixed to each other and may be provided in the same housing or server. These may be made of individual circuits or network units scattered over a given area and connected (via wires or wirelessly) to each other via one or more networks, such as or including the WWW, so as to be able to exchange data. This exchange may be under any data transfer protocol, such as TCP, Ethernet, Bluetooth or the like, and using any type of data transfer, wired or wireless. Naturally, the individual means of the system may each be formed by one or more processors, such as FPGAs, ASICs or the like, or a single such processor may form multiple of the means and perform multiple of the steps.

Generally, the storage may be any form of storing unit, such as a monolithic storing unit or one composed by a number of storing elements separated in space. Usual storing technologies are based on hard drives, floppy discs, RAM, ROM, PROM, EPROM, EEPROM, Flash, memory cards, CD-ROM, DVD, memory cards, or the like.

If separate storing units are provided, the address will describe both the identity of the actual storing unit and the "local address" therein.

The functionality of the system need not merely be the forwarding of data. Additional processing may, as will be described further below, be performed, such as the analysis of the data packets.

The receiving means usually will be a type of networking element adapted to receive data packets from a network. Thus, this means may have a PHY, a MAC or the like, if Ethernet data packets are to be received. A large number of data protocols are known, but the skilled person will know what receiving means are useful in relation to which protocols. The receiving means may store the data packets or output these without delay for further processing/storing/transport. Most often, a buffer is provided to take into account delays, but this is not a requirement.

The first information, the address and the request information may be forwarded and transmitted on a communication means, such as a bus, separate from that used by the storing means for storing the at least part of the data packet and the reply information and used by the controller to read the reply information.

The first information may relate to any relevant feature of the packet, such an addressee thereof (MAC or IP address, receiver or transmitter), a size/length thereof, its belonging to or a position thereof in - a stream, its time of arrival, or the like. Naturally, any number of such features may form part of the first information.

Also, the address determined by the controller and received by the first receiving means may be any type of address, such as an absolute address in a single storage or multiple, interconnected storages, a relative address, such as an address relating to the storage or an address in the storage. It is noted that an address may be further translated in order to obtain the actual address for storage. The address may be the identity of e.g. a queue or address space or area in the storage within which the data is stored, such as in a predetermined order.

The storing means thus may select the parts of the data packet, if not the whole data packet, to be stored and store this. Naturally, if the data or part thereof is not desired transmitted to e.g. the receiver, the address portions thereof may be deleted or not stored in order to save space in the storage.

The reply information represents information as to received addresses at which at least part of the data packets have been stored. The controlling unit stores or holds the addresses which have been reserved or forwarded, such as to the individual receiving and forwarding element. These addresses, or information representing these, may be held in any type of storage and may be held in separate storages for each receiving and forwarding element or in a single storage. These addresses may be represented themselves, or information may be held from which the addresses may be derived.

An advantage of the storing means outputting the reply information to the storage is that when outputting the reply information, the storing means is well aware of which addresses have already been at least forwarded to the storage. Thus, updated information is available.

Naturally, the reply information may comprise the actual, received and used or not-yet-used addresses.

A more elegant solution is seen when the order of allocation of the held addresses is kept in mind in the controller. In that situation, the reply information need be only a number relating to the number of received and used addresses, such as the number of addresses used since, for example, the last transmission of reply information. Alternatively, the reply information may be the number of received addresses which have, in fact, not yet been used, such as at the time of storing the reply information. From this information, the controlling unit is able to determine at which addresses in the storage, data is present.

An even more elegant solution is described further below, where the mere storing of the reply information may be used, in the controller, for knowing which addresses have been loaded with data.

The determining means may determine the address in accordance with any principle or policy. It may be desired to store the data in a given order, such as the order of time or receipt, and/or it may be desired to store data relating to certain addressees or flows/streams separately. As will be described further below, a number of queues may be implemented, so that data may be stored in queues in accordance with certain policies.

Usually, the address determination is performed on the basis of the first information, and then, the first information is made to comprise the information required for the address determination.

It is noted that multiple addresses may be allocated to one data packet, depending on the size thereof. In this situation, the size or the number of addresses required may form part of the first information.

The maintaining or updating of information relating to addresses in which data packets, or the at least part thereof, are stored may be performed in order to know which addresses are not in use, and therefore preferably used by the determining means determining the addresses. In this manner, an address is not allocated which is already in use.

Other users of such information may be processes or processors reading information from the storage and thus freeing addresses for re-use and re-allocation by the determining means. Such processes/processors require knowledge as to in which addresses valid data is present.

Naturally, the information relating to addresses in which data packets are stored may represent this knowledge in a number of manners. One manner is to store or know each address in which data is stored, or alternatively each address in which data is not stored.

More efficient manners, naturally, exist, one being the below described of the use of one or more queues. One advantage of a queue is that only the end(s) of the queue are required in order to determine which part of or how much of a queue is allocated.

Any means may be used for transporting the (at least parts of) data packets and reply information to the storing means, read the reply information from the storing means and for transporting the first information, address and request information to/from the receiving and forwarding elements. Such means may e.g. be selected so as to be able to support a varying number of receiving and forwarding elements. This may be the situation in both wireless communication and different types of wired data busses, such as ring busses and star-shaped busses as well as standard busses and be able to communicate any type of information or data on any protocol.

Preferably, such means are a data bus common to the controlling unit and all receiving and forwarding means.

If this transporting means is of a type where data is not allowed to over-take when forwarded thereto, it is clear that the reply information output by a storing means will be quite accurate in that this storing means will know to which addresses data has been forwarded at the time of outputting the reply information. Also, any storing delays will be taken into account in that the reply information, once stored in the storage, will indicate to the controlling unit exactly which addresses have now been used.

In fact, when the storing means are adapted to store the reply information only after the at least part of the data packets have been stored, or at least forwarded to the transporting means, at all addresses received prior to receipt of the request information, the very existence of this reply information in the storage will be an indication that such addresses are now in use.

Then, when the controlling unit is aware of which addresses were returned to each receiving and forwarding element prior to and/or after the outputting of the request information to that element, the controlling unit, when determining that the reply information is present in the storage, will known which addresses are now in use. It is noted that this is irrespective of any delays existing on the data path from the storing means to the storage.

In one embodiment, each receiving and forwarding element further comprises means for determining a point in time of receipt/access of the data packet, the time determining means comprising clock means, the clock means of all time determining means being synchronized. Different synchronization manners may be adopted, such as simply providing a global synchronization or clocking signal. Alternatively, the clocks of individual elements or circuits may be synchronized to one of the clocks, such as that of the controlling unit.

In this situation, the time of arrival or time stamp may form part of the first information and thus be relayed to the controlling unit which may then use this information to allocate addresses so that the data packets are stored in the correct order.

Preferably, one or more queues are defined in the storage as separate groups of addresses, the determining means of the controlling unit being adapted to determine, from the first information, a queue to which to add the pertaining data packet, and to select an address from the groups of addresses of the pertaining queue.

Usually, a queue is implemented as an ordered list where data is added to an end of the list and de-queued from the other end of the list. Most preferably, the queue is implemented as a circular list. The ends of the list thus may be identified by two pointers, one pointer identifying the next address to receive data (or the latest address used), and the other identifying the next address to be de-queued or the latest de-queued address.

The information as to which address in which data is stored thus may be represented by the pointers of the queues or may be used for generating, controlling or updating these pointers.

In this situation, the determining means of the controlling unit may be adapted to determine an address in the determined queue so that the data packets are stored in the queue in an order of receipt/access. This order of receipt/address may be that of receipt of the first information by the controlling unit or the receipt/address by the receiving and transmitting element. In the latter situation, the receiving and transmitting units preferably are adapted to determine the time of receipt of each data packet and forward this information in the first information in order for the determining means to be able to determine the address.

In one embodiment, the assembly further comprises means for reading or de-queuing data from the storage, the reading means comprising means for outputting third information relating to one or more address(es) of the storing means, the data of which has been read/de-queued. Also this information is desired in determining in which addresses, data is stored, such as in the updating or managing of the pointers or end addresses of the queues. Naturally, this third information may be the individual addresses de-queued, or the third information may represent a plurality of addresses, such as an interval of de-queued addresses.

Thus, preferably, the controlling unit is adapted to hold, for each queue, a write pointer identifying a next address in which to add data and a read pointer identifying a next address to be read/de-queued from the queue,
the reading/updating means being adapted to:
- update the write pointer of the queue on the basis of received reply information and
- update, on the basis of received third information, the read pointer of the queue from which data has been de-queued and
wherein the determining means are adapted to determine the address also on the basis of the read and write pointers of the queues.

In this situation, the reading/de-queuing means may actually be updating the read pointer(s) and merely forward a copy thereof as the third information to the controller. In this manner, the read pointers are maintained by the reading/de-queuing means and the write pointers by the controller, which then merely receives, from time to time, a copy of the updated read pointer(s).

In this manner, a compact yet efficient representation of the addresses comprising valid data is obtained.

However, a problem may be seen when e.g. congestion or delays are seen between the receiving and forwarding elements and the storage. Thus, an address may be allocated to a data packet, but storage of this data packet may be delayed. This should be brought to the attention of the de-queuing means. In this situation, the reading/updating means preferably is adapted to update the write pointer to an address only if reply information has been received representing all addresses between the read and write pointers.

Thus, if a data packet has not reached the storage, but subsequent data packets, in the queue, have, the write pointer is still not updated, as this would include the "hole" or missing data packet in the queue. Then, when the missing data packet has been stored, the write pointer is updated to the next "hole" or the end of the queue. This identification of "holes" may be performed by the controlling means and on the basis of the second information.

Another aspect of the invention relates to a method according to claim 9.

Preferably, a plurality of the receiving and forwarding elements perform the above steps simultaneously. A receiving and forwarding element may be receiving/accessing one data packet, outputting first information relating to an earlier received/accessed data packet and receiving an address for an even earlier received/accessed data packet.

Also, the controlling unit may determine the addresses for multiple data packets simultaneously, and the step of receiving the reply information and updating the information relating to the addresses may be performed simultaneously to the other steps.

As described above, the number of receiving and forwarding elements may vary depending on the desired performance and bandwidth.

In a preferred first embodiment, the storing step comprises storing the reply information only after the at least part of the data packets have been stored at all addresses received prior to receipt of the request information.

In a preferred second embodiment, the storing step comprises all receiving and forwarding elements forwarding the data packets to the storage over a common bus which preferably is also used for storing and receiving the reply information.

Especially if this common bus is of a type where over-taking is not allowed when data has been transferred thereto, i.e. data or reply information from a storing means may not overtake each other between the individual storing means and the storage, the storage means will be able to provide exact information in the reply information as to which addresses are in use (or not in use). Naturally, it may be allowed that data/reply information from one storing means overtakes that of another storing means, as long as the data/reply information from each storing means is stored in the order (in time) of providing to the bus.

If the first and second embodiments are combined with the non-overtaking, the controller may, from the very presence of the reply information in the storage, determine or describe which addresses are now in use or not in use.

Alternatively, the addresses may be directly or indirectly provided in the reply information for the controller to use. Also in this situation is the non-overtaking transport desired.

In one embodiment, the receiving and forwarding element further determines a point in time of receipt/access of the data packet, the time determining means comprising clock means, the clock means of all time determining means being synchronized. As mentioned above, different manners of obtaining this synchronization exist. Then, this point in time may form part of the first information, and the address determination may be based thereon.

A plurality of queues may be defined in the storage as separate groups of addresses, the determining step comprising determining, from the first information, a queue to which to add the pertaining data packet, and selecting an address from the groups of addresses of the pertaining queue.

In that situation, the determining step preferably comprises determining an address in the determined queue so that the data packets are stored in the queue in an order of receipt/access.

In one embodiment, the method further comprises the step of reading or de-queuing data from the storage, the reading step comprising outputting third information relating to one or more address(es) of the storing means, the data of which has been read/de-queued. The third information may be output each time an address has been de-queued, when a predetermined number of addresses have been de-queued or periodically, for example.

Preferably, the determining step comprises determining, for each queue, a write pointer identifying a next address in which to add data and a read pointer identifying a next address to be read/de-queued from the queue,
the reading/updating step comprising:
- updating the write pointer of the queue on the basis of received reply information and
- updating, on the basis of received third information, the read pointer of the queue from which data has been de-queued and
the determining step comprising determining the address also on the basis of the read and write pointers of the queues.

Then, the determining step may comprise updating the write pointer to an address only if reply information has been received representing all addresses between the read and write pointers.

In the following, a preferred embodiment according to the invention is described with reference to the drawing wherein:
- figure 1 illustrates a preferred embodiment of an apparatus according to the invention and
- figure 2 illustrates the use of queues in the apparatus according to figure 1.

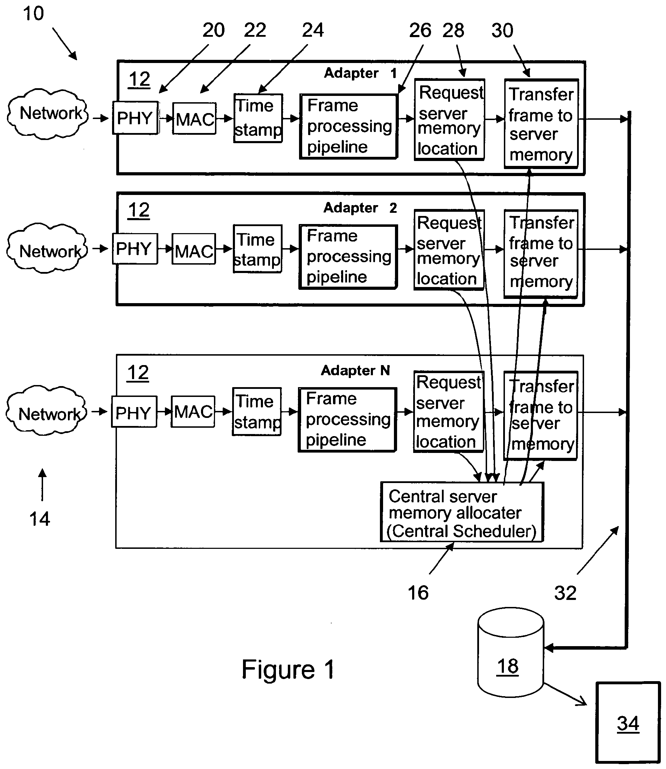

In figure 1, an embodiment 10 of an apparatus for analyzing and forwarding data frames is illustrated having a number of adapters 12 each connected to and receiving data from a network, such as the WWW.

In general, a system of this type may be used for receiving a large number of data packets and facilitate storage and/or forwarding thereof in a suitable manner. These data packets usually are transmitted between pairs of computers or networks on a data connection monitored by the present system. Thus, the data packets normally are not meant for nor addressed to or from the present system.

This data may, when stored, be processed by one or more subsequent processes or processors 34. In order to be able to handle very large amounts of data, structured storing is desired in order to achieve swift, yet structured, retrieval of the data. Also, a plurality of processors is provided when a single processor does not suffice, whereby separate storing of data for each processor is desired.

The processors may be used for analyzing the data traffic, for storing the data and/or for transmitting the data to other network elements, computers or the like, depending on the result of the processing in the processors.

Alternatively, or additionally, it may be desired to subsequently output the data again, whereby it may also or alternatively be desired to store the data in a manner or sequence in which the outputting is desired.

Normally, the data packets are parts of streams of data packets. When two processors or computers interact, streams of data packets are exchanged. This stream may be a file transfer or an exchange of audio/video, such as Voice over IP. A stream is a sequence of data packets which are similar. The belonging of a data packet to a stream is determinable, and it is desired that all data packets of a stream are stored together, in the desired order, handled by the same subsequent process or processor and/or output in that order.

The belonging of a received data frame to a stream is determined from an analysis of the frame. This analysis is described in further detail below.

The present embodiment aims at providing a set-up in which multiple adapters 12 divide the task of analyzing the frames/packages and/or storing these.

More particularly, the adapters 12 receive data frames from the network 14, such as the WWW, a trunk or network of any suitable type. Each adapter 12 receives a number of frames independently of the other adapters 12.

Preferably, all adapters, potentially except one, are identical and each comprises a so-called PHY 20, which is an element adapted to receive data frames from a network or data cable and a so-called MAC circuit 22 which converts the received frames to a standard usually used on data busses on e.g. computers.

Having received the data frame, it is provided with a time stamp in the circuit 24, where after the frame is fed to an analyzing circuit 26 which derives data relating to the data frame, such as relating to a standard the frame conforms to, such as whether it is VLAN and/or MPLS tagged, and potentially address data there from. A plurality of different types of standards are known, each of which defines which types of data (address, encapsulation, payload, error correction etc) are present in the frame and where such data is present. Depending on the particular type of packet, different types of data may be derived.

The circuit 26 outputs data identifying the data frame, such as its belonging to a data packet stream, or a queue in a central storage. Then, the length of the data frame, the ID/queue identification and the time stamp of the data frame are transmitted, in a request circuit 28, to a central server memory allocator or controller 16, which returns an address within the storage 18 in which the data frame is to be stored. This address is returned to a transfer circuit 30 also receiving the data frame and which subsequently transmits the data frame to the identified address via a common data bus 32, such as running a PCI Express (PCIe) protocol. This storing may be using Direct Memory Addressing, which means that the frame is stored directly at the desired address, and that no further analysis is required. This is the fastest manner of storing data in a data storage, but it requires that the physical address is known.

Naturally, the circuit 28 may alternatively output, together with the time stamp and length of the packet, other information identifying the frame (type, addresses or the like), whereby the allocator itself will determine the queue to which the frame is to be added and thus derive the address at which the frame is to be stored.

The "out of band" communication between the allocator 16 and the adapters 12 may be a low bandwidth point-to-point communication, a daisy chain topology, or a ring topology. This communication, as is described further below, is also used for synchronizing the clocks of the time stamp circuits 24. A suitable protocol for this communication may be a standard 64b/66b codec requiring approximately 1Gbps full duplex bandwidth per 10Gbps of Ethernet front port (PHY) bandwidth.

Another use of the communication between the allocator and the adapters 12 is that of keeping the allocator informed of the storing progress.

The allocator 16 is aware of which addresses in the storage 18 have been allocated and to which adapter 12. In order to determine which addresses are actually used, the allocator 16 transmits requests, such as in the form of request or idle packets, to the individual adapters 12. In response to a request, the adapter 12 will transmit a reply package to the storage 18 in a predetermined address. The adapter 12 is adapted to output the data packets and the response in the order of receipt of the individual addresses and the request, respectively.

An adapter 12 may not be able to immediately forward a data packet to the storage 18, even though one or more addresses in the storage 18 have been allocated for that data packet, as delays may occur, such as due to arbitration on the bus 32. However, as the data packets and the reply are output in order from the adapter 12, the storing of the reply will indicate that the data packets pertaining to all earlier received addresses have now been stored by that adapter 12.

Each adapter 12 may store its reply at a different address in order for the allocator 16 to determine which adapter 12 has forwarded a reply. In the present embodiment, each request will have therein a number, which is copied into the reply, so that the allocator 16 can determine that an updated reply has been stored by comparing to the former number of that address.

The allocator 16 thus will monitor the addresses and determine when an update of a number exists, whereby an adapter 12 has stored data packets in all addresses received since the receipt of the request for that adapter 12 with the number just received in the reply. When the allocator 16 keeps track of all addresses output before and after the requests (including the numbers), the allocator 16 can determine which of the addresses in the storage are occupied, which have been forwarded to the adapters 12 but are still not in use, and which addresses are free.

In an alternative embodiment, the reply from the adapter 12 may comprise all addresses in which data have been stored since the last reply, or all addresses received at which no data have been stored yet. In this situation, the allocator 16 may not need to keep track of the addresses allocated but only those in which data is stored.

In general, this free/used information may be used for reading data packets out of the storage 18. Naturally, reading information from an address which has been allocated but wherein the correct data has not yet been stored will be problematic.

In most circumstances, the data packets are stored in the storage 18 as queues. In this situation, holes may occur in a queue due to a data packet for which space has been reserved/allocated but which due to a delay has still not arrived.

Preferably, a queue in the storage is simply implemented as a list, preferably a circular list, of addresses, and a pointer may be used for pointing to the end of the stored data at which new data is to be written/added, and another pointer may point to the end from which data is de-queued. The allocator 16 may update both pointers but at least that at the writing end.

Then, if a hole exists at the writing end, the allocator 16 will not move the writing pointer to have the hole included between the writing and reading pointers which together denote the addresses in which data exist. Contrary to that, the writing pointer will only be positioned at the hole and then, when the hole is "filled", move the pointer to the next hole or to the end of the used addresses. In this manner, any process de-queuing the data will not de-queue the hole and thus miss the not-yet-arrived packet.

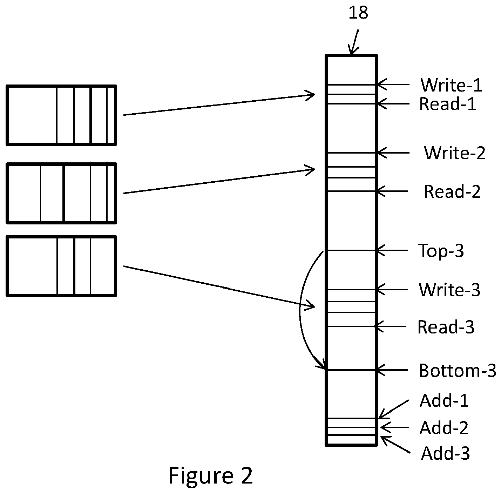

Figure 2 illustrates the use of queues and a manner of ensuring that the processor 34 is aware of which parts of the queue contain valid data.

In figure 2, three queues are illustrated to the left. These queues are queues of data in each adapter 12, which data await transmission to the main storage 18. Fat lines are illustrated in each queue, and this describes the position, in the queue of data, of receiving a request and thus for outputting a reply to the storage 18 in the embodiment where this data is output in the order instructed by the allocator 16. Thus, when the fat line is at the front of the queue, the corresponding reply is fed to the storage 18. The upper queue feeds this reply to the address Add-1, the middle one to Add-2 and the lower one to Add-3.

In the storage 18, the queues are implemented as circular queues, and this is illustrated at queue 3, which overall has been assigned the storage positions between the addresses indicated at the Bottom-3 and Top-3 pointers. The curved arrow indicates that the queue is circular and that, consequently, when the Top-3 pointer is reached, further data is added from the Bottom-3 pointer. In each queue, valid data is present between the Read pointer (Read-1/2/3) and the Write pointer (Write-1/2/3). The processor 34 then is allowed to read data from the Read pointer and to the Write pointer. New data is stored in addresses above the Write pointer, but as holes (see above) may still exist, the processor is not allowed to de-queue such data, before no holes are present. The processor, when having de-queued data, may alter the corresponding Read pointer to make the read addresses available to new data.

When a reply (fat line) is to be forwarded to the Add-address, the corresponding queue may be assumed complete, where after the Write pointer may be moved to the top address currently used, so that the processor has more data available. Thus, when the allocator 16 sees the data, or altered data, at the Add-address, it may shift the Write pointer to an address which could have been fixed at the point in time of forwarding the request information, as the Allocator 16 at that point in time was aware of which addresses of the pertaining queue were allocated before the request point in time.

In the situation where multiple adapters 12 are able to feed data to the same queue, the allocator 16 may issue a request to all adapters 12 simultaneously (or at least substantially simultaneously). Then, the Write pointer of the shared queue is not altered, before the allocator 16 sees amended data in all relevant Add-addresses, as this is ensures that all data between the former Write address and the new Write address of the shared queue are occupied by valid data.

In fact, it may be desired to always have the allocator 16 issue request information to all adapters 12 and await altering any Write address until all Add-addresses have changed.

Naturally, the more often the allocator 16 requests this information, the swifter will the updating of the pointers be, and the shorter will delays of the later processing be. On the other hand, the more traffic is present on the links between the allocator 16 and the adapters 12 and the bus 32.

It is noted that the above embodiment 10 may store the data frames in any number of queues in the storage 18. Which queue to forward a data packet to may depend on the future destiny of the frame. If the frame is to be analysed by one or more processors, one queue may be provided for each processor, and the forwarding of frames to a queue may depend on how long the queue is before adding the packet. If the queue is long, and the processor thus busy, the packet may be provided in a shorter queue of a processor thus less busy.

## Claims

1. An apparatus for receiving and forwarding data packets, the apparatus comprising a controlling unit, a storage comprising a plurality of addresses at which data may be stored, and a plurality of data receiving and forwarding elements each comprising:
- means for receiving or accessing a data packet,
- means for outputting first information relating to the data packet,
- first receiving means for receiving an address for storing at least part of the data packet,
- second receiving means for receiving request information and for generating reply information,
- means for storing the at least part of the data packet in the storage at the received address and for storing the reply information in the storage at a predetermined address, the reply information representing information as to received addresses at which the at least part of the data packets have been stored,
the controlling unit comprising:
- means for receiving the first information,
- means for determining an address and returning the address to the second receiving means of the pertaining data receiving and forwarding element,
- means for outputting the request information to at least one of the data receiving and forwarding elements,
- means for holding information relating to addresses returned to the at least one data receiving and forwarding element subsequent to outputting the request information thereto, and
- means for reading, from the predetermined address in the storage, the reply information and updating information, based on the held information, relating to addresses in the storage in which the at least parts of the data packets are stored.

2. An apparatus according to claim 1, wherein the storing means are adapted to store the reply information only after the at least part of the data packets have been stored at all addresses received prior to receipt of the request information.

3. An apparatus according to claim 1, wherein each receiving and forwarding element further comprises means for determining a point in time of receipt/access of the data packet, the time determining means comprising clock means, the clock means of all time determining means being synchronized.

4. An assembly according to any of the preceding claims, wherein one or more queues are defined in the storage as separate groups of addresses, the determining means of the controlling unit being adapted to determine, from the first information, a queue to which to add the pertaining data packet, and to select an address from the groups of addresses of the pertaining queue.

5. An assembly according to claim 4, wherein the determining means of the controlling unit is adapted to determine an address in the determined queue so that the data packets are stored in the queue in an order of receipt/access.

6. An assembly according to any of the preceding claims, the assembly further comprising means for reading or de-queuing data from the storage, the reading means comprising means for outputting third information relating to one or more address(es) of the storing means, the data of which has been read/de-queued.

7. An assembly according to claim 4 and 6, wherein the controlling unit is adapted to hold, for each queue, a write pointer identifying a next address in which to add data and a read pointer identifying a next address to be read/de-queued from the queue,
the reading/updating means being adapted to:
- update the write pointer of the queue on the basis of received reply information and
- update, on the basis of received third information, the read pointer of the queue from which data has been de-queued and
wherein the determining means are adapted to determine the address also on the basis of the read and write pointers of the queues.

8. An assembly according to claim 7, wherein the reading/updating means is adapted to update the write pointer to an address only if reply information has been received representing all addresses between the read and write pointers.

9. A method of operating an apparatus comprising a controlling unit, a plurality of data receiving and forwarding elements, and a storage comprising a plurality of addresses at which data may be stored, the method comprising:
a receiving and forwarding element:
- receiving or accessing a data packet,
- outputting first information relating to the data packet,
- receiving an address for storing at least part of the data packet,
- storing the at least part of the data packet at the address in the storage,
- receiving request information and generating reply information,
and
- storing the reply information in the storage at a predetermined address, the reply information representing information as to received addresses at which at least part of the data packets have been stored,
the controlling unit:
- receiving the first information,
- determining an address, holding the address and returning the address to the receiving means of the pertaining data receiving and forwarding element,
- outputting the request information to the data receiving and forwarding element, and
- reading, from the storage, the reply information from the predetermined address and updating information, based on the held information, relating to addresses in the storage in which the at least parts of the data packets are stored.

10. A method according to claim 9, wherein the storing step comprises storing the reply information only after the at least part of the data packets have been stored at all addresses received prior to receipt of the request information.

11. A method according to claim 9 or 10, wherein the receiving and forwarding element further determines a point in time of receipt/access of the data packet, the time determining means comprising clock means, the clock means of all time determining means being synchronized.

12. A method according to any of claims 9-11, wherein a plurality of queues are defined in the storage as separate groups of addresses, the determining step comprising determining, from the first information, a queue to which to add the pertaining data packet, and selecting an address from the groups of addresses of the pertaining queue.

13. An assembly according to claim 12, wherein the determining step comprises determining an address in the determined queue so that the data packets are stored in the queue in an order of receipt/access.

14. A method according to any of claims 9-13, further comprising the step of reading or de-queuing data from the storage, the reading step comprising outputting third information relating to one or more address(es) of the storing means, the data of which has been read/de-queued.

15. A method according to claim 12 and 14, wherein the determining step comprises determining, for each queue, a write pointer identifying a next address in which to add data and a read pointer identifying a next address to be read/de-queued from the queue,
the reading/updating step comprising:
- updating the write pointer of the queue on the basis of received reply information and
- updating, on the basis of received third information, the read pointer of the queue from which data has been de-queued and
the determining step comprising determining the address also on the basis of the read and write pointers of the queues.

16. A method according to claim 15, wherein the determining step comprises updating the write pointer to an address only if reply information has been received relating to all addresses between the read and write pointers.

## Patentansprüche

1. Vorrichtung zum Empfangen und Weiterleiten von Datenpaketen, die Vorrichtung aufweisend eine Steuereinheit, einen Speicher, der mehrere Adressen aufweist, an denen Daten gespeichert werden können, und mehrere Datenempfangs- und Weiterleitungselemente, die jeweils aufweisen:
- Mittel zum Empfangen, oder Zugreifen darauf, eines Datenpakets,
- Mittel zum Ausgeben von ersten Informationen, die sich auf das Datenpaket beziehen,
- erste Empfangsmittel zum Empfangen einer Adresse zum Speichern mindestens eines Teils des Datenpakets,
- zweite Empfangsmittel zum Empfangen von Anforderungsinformationen und zum Erzeugen von Antwortinformationen,
- Mittel zum Speichern des mindestens einen Teils des Datenpakets in dem Speicher an der empfangenen Adresse und zum Speichern der Antwortinformationen in dem Speicher an einer vorbestimmten Adresse, wobei die Antwortinformationen Informationen bezüglich empfangener Adressen, an denen der mindestens eine Teil der Datenpakete gespeichert wurde, darstellen,
wobei die Steuereinheit aufweist:
- Mittel zum Empfangen der ersten Informationen,
- Mittel zum Bestimmen einer Adresse und zum Zurückgeben der Adresse an die zweiten Empfangsmittel des zugehörigen Datenempfangs- und Weiterleitungselements,
- Mittel zum Ausgeben der Anforderungsinformationen an mindestens eines der Datenempfangs- und Weiterleitungselemente,
- Mittel zum Halten von Informationen, die sich auf Adressen beziehen, die an das mindestens eine Datenempfangs- und Weiterleitungselement zurückgegeben wurden, nachfolgend auf das Ausgeben der Anforderungsinformationen dazu, und
- Mittel zum Lesen, an der vorbestimmten Adresse in dem Speicher, der Antwortinformationen und von Aktualisierungsinformationen, basierend auf den gehaltenen Informationen, die sich auf Adressen in dem Speicher beziehen, an denen die mindestens Teile der Datenpakete gespeichert wurden.

2. Vorrichtung nach Anspruch 1, wobei die Speichermittel dazu angepasst sind, die Antwortinformationen erst zu speichern, nachdem der mindestens Teil der Datenpakete an allen Adressen gespeichert wurde, die vor dem Empfang der Anforderungsinformationen empfangen wurden.

3. Vorrichtung nach Anspruch 1, wobei jedes Empfangs- und Weiterleitungselement ferner Mittel zum Bestimmen eines Zeitpunkts des Empfangs/Zugriffs des Datenpakets aufweist, wobei die Zeitbestimmungsmittel Taktgebermittel aufweisen, wobei die Taktgebermittel aller Zeitbestimmungsmittel synchronisiert sind.

4. Anordnung nach einem der vorhergehenden Ansprüche, wobei eine oder mehrere Warteschlangen in dem Speicher als separate Gruppen von Adressen definiert sind, wobei die Bestimmungsmittel der Steuereinheit dazu angepasst sind, aus den ersten Informationen eine Warteschlange zu bestimmen, zu der das zugehörige Datenpaket hinzugefügt werden soll, und eine Adresse aus den Gruppen von Adressen der zugehörigen Warteschlange auszuwählen.

5. Anordnung nach Anspruch 4, wobei die Bestimmungsmittel der Steuereinheit dazu angepasst sind, eine Adresse in der bestimmten Warteschlange zu bestimmen, so dass die Datenpakete in der Warteschlange in einer Reihenfolge des Empfangs/Zugriffs gespeichert werden.

6. Anordnung nach einem der vorangehenden Ansprüche, wobei die Anordnung ferner Mittel zum Lesen oder Ausder-Warteschlange-Entfernen von Daten aus dem Speicher aufweisen, wobei die Lesemittel Mittel zum Ausgeben von dritten Informationen aufweisen, die sich auf eine oder mehrere Adresse(n) der Speichermittel beziehen, deren Daten gelesen/aus-der-Warteschlange-entfernt wurden.

7. Anordnung nach Anspruch 4 und 6, wobei die Steuereinheit dazu angepasst ist, für jede Warteschlange, einen Schreibzeiger, der eine nächste Adresse identifiziert, an der Daten hinzugefügt werden sollen, und einen Lesezeiger, der eine nächste Adresse identifiziert, die aus der Warteschlange gelesen/entfernt werden soll, zu halten,
wobei die Lese-/Aktualisierungsmittel angepasst sind zum:
- Aktualisieren des Schreibzeigers der Warteschlange basierend auf den empfangenen Antwortinformationen, und
- Aktualisieren, basierend auf den empfangenen dritten Informationen, des Lesezeigers der Warteschlange, aus der die Daten entfernt wurden, und
wobei die Bestimmungsmittel dazu angepasst sind, die Adresse auch basierend auf die Lese- und Schreibzeiger der Warteschlangen zu bestimmen.

8. Anordnung nach Anspruch 7, wobei die Lese-/Aktualisierungsmittel dazu angepasst sind, den Schreibzeiger nur dann auf eine Adresse zu aktualisieren, wenn Antwortinformationen empfangen wurden, die alle Adressen zwischen dem Lese- und dem Schreibzeiger darstellen.

9. Verfahren zum Betreiben eine Vorrichtung, die eine Steuereinheit, mehrere Datenempfangs- und Weiterleitungselemente, und einen Speicher, der mehrere Adressen aufweisen, an denen Daten gespeichert werden können, aufweist, wobei das Verfahren aufweist:
ein Empfangs- und Weiterleitungselement:
- Empfangen oder Zugreifen auf ein Datenpaket,
- Ausgeben von ersten Informationen, die sich auf das Datenpaket beziehen,
- Empfangen einer Adresse zum Speichern mindestens eines Teils des Datenpakets,
- Speichern des mindestens einen Teils des Datenpakets an der Adresse in dem Speicher,
- Empfangen von Anforderungsinformationen und Erzeugen von Antwortinformationen, und
- Speichern der Antwortinformationen in dem Speicher an einer vorbestimmten Adresse, wobei die Antwortinformationen Informationen bezüglich empfangener Adressen, an denen mindestens ein Teil der Datenpakete gespeichert wurden, darstellen,
die Steuereinheit:
- Empfangen der ersten Informationen,
- Bestimmen einer Adresse, Halten der Adresse und Zurückgeben der Adresse an die Empfangsmittel des zugehörigen Datenempfangs- und Weiterleitungselements,
- Ausgeben der Anforderungsinformationen an das Datenempfangs- und Weiterleitungselement, und
- Lesen, aus dem Speicher, der Antwortinformationen von der vorbestimmten Adresse und Aktualisieren von Informationen, basierend auf den gehaltenen Informationen, die sich auf Adressen in dem Speicher beziehen, an denen die mindestens Teile der Datenpakete gespeichert wurden.

10. Verfahren nach Anspruch 9, wobei der Speicherungsschritt ein Speichern der Antwortinformationen erst dann, nachdem der mindestens Teil der Datenpakete an allen Adressen gespeichert wurde, vor dem Empfang der Anforderungsinformationen aufweist.

11. Verfahren nach Anspruch 9 oder 10, wobei das Empfangs- und Weiterleitungselement ferner einen Zeitpunkt des Empfangs/Zugriffs des Datenpakets bestimmt, wobei die Zeitbestimmungsmittel Taktgebermittel aufweisen, wobei die Taktgebermittel aller Zeitbestimmungsmittel synchronisiert werden.

12. Verfahren nach einem der Ansprüche 9 bis 11, wobei die mehreren Warteschlangen in dem Speicher als separate Gruppen von Adressen definiert werden, wobei der Bestimmungsschritt ein Bestimmen, aus den ersten Informationen, einer Warteschlange, zu der das zugehörige Datenpaket hinzugefügt werden soll, und Auswählen einer Adresse aus den Gruppen von Adressen der zugehörigen Warteschlange aufweist.

13. Anordnung nach Anspruch 12, wobei der Bestimmungsschritt ein Bestimmen einer Adresse in der bestimmten Warteschlange, so dass die Datenpakete in der Warteschlange in einer Reihenfolge des Empfangs/Zugriffs gespeichert werden, aufweist.

14. Verfahren nach einem der Ansprüche 9 bis 13, ferner aufweisend den Schritt des Lesens oder Aus-der-Warteschlange-Entfernens von Daten aus dem Speicher, wobei der Leseschritt ein Ausgeben von dritten Informationen, die sich auf eine oder mehrere Adresse(n) der Speichermittel beziehen, aus denen die Daten gelesen/aus-der-Warteschlange-entfernt wurden, aufweist.

15. Verfahren nach Anspruch 12 und 14, wobei der Bestimmungsschritt ein Bestimmen, für jede Warteschlange, eines Schreibzeigers, der eine nächste Adresse identifiziert, an der Daten hinzugefügt werden sollen, und eines Lesezeigers, der eine nächste Adresse identifiziert, die aus der Warteschlange gelesen/entfernt werden soll, aufweist,
wobei der Lese-/Aktualisierungsschritt aufweist:
- Aktualisierung des Schreibzeigers der Warteschlange basierend auf den empfangenen Antwortinformationen, und
- Aktualisierung, basierend auf den empfangenen dritten Informationen, des Lesezeigers der Warteschlange, aus der die Daten entfernt wurden, und
der Bestimmungsschritt ein Bestimmen der Adresse auch basierend auf den Lese- und Schreibzeigern der Warteschlangen aufweist.

16. Verfahren nach Anspruch 15, wobei der Bestimmungsschritt ein Aktualisieren des Schreibzeigers auf eine Adresse nur dann, wenn Antwortinformationen, die sich auf alle Adressen zwischen dem Lese- und Schreibzeiger beziehen, empfangen wurden.

## Revendications

1. Appareil de réception et de transfert de paquets de données, l'appareil comprenant une unité de commande, une mémoire comprenant une pluralité d'adresses auxquelles des données peuvent être mémorisées, et une pluralité d'éléments de réception et de transfert de données, chacun d'eux comprenant :
- des moyens de réception ou d'accès à un paquet de données,
- des moyens de délivrance de premières informations relatives au paquet de données,
- des premiers moyens de réception pour recevoir une adresse pour la mémorisation d'au moins une partie du paquet de données,
- des deuxièmes moyens de réception pour recevoir des informations de demande et pour générer des informations de réponse,
- des moyens de mémorisation de l'au moins une partie du paquet de données dans la mémoire à l'adresse reçue et de mémorisation des informations de réponse dans la mémoire à une adresse prédéterminée, les informations de réponse représentant des informations concernant des adresses reçues auxquelles l'au moins une partie des paquets de données a été mémorisée,
l'unité de commande comprenant :
- des moyens de réception des premières informations,
- des moyens de détermination d'une adresse et de retour de l'adresse aux deuxièmes moyens de réception de l'élément de réception et de transfert de données pertinent,
- des moyens de délivrance des informations de demande à au moins l'un des éléments de réception et de transfert de données,
- des moyens de conservation d'informations relatives à des adresses retournées à l'au moins un élément de réception et de transfert de données à la suite de la délivrance des informations de demande à celui-ci, et
- des moyens de lecture, à partir de l'adresse prédéterminée dans la mémoire, des informations de réponse et de mise à jour d'informations, sur la base des informations conservées, relatives à des adresses dans la mémoire auxquelles les au moins des parties des paquets de données sont mémorisées.

2. Appareil selon la revendication 1, dans lequel les moyens de mémorisation sont aptes à mémoriser les informations de réponse uniquement après la mémorisation de l'au moins une partie des paquets de données à toutes les adresses reçues avant de recevoir les informations de demande.

3. Appareil selon la revendication 1, dans lequel chaque élément de réception et de transfert comprend en outre des moyens de détermination d'un point dans le temps de réception/d'accès au paquet de données, les moyens de détermination de temps comprenant des moyens d'horloge, les moyens d'horloge de tous les moyens de détermination de temps étant synchronisés.

4. Ensemble selon l'une quelconque des revendications précédentes, dans lequel une ou plusieurs files d'attente sont définies dans la mémoire en tant que groupes distincts d'adresses, les moyens de détermination de l'unité de commande étant aptes à déterminer, à partir des premières informations, une file d'attente à laquelle ajouter le paquet de données pertinent, et à sélectionner une adresse à partir des groupes d'adresses de la file d'attente pertinente.

5. Ensemble selon la revendication 4, dans lequel les moyens de détermination de l'unité de commande sont aptes à déterminer une adresse dans la file d'attente déterminée de sorte que les paquets de données soient mémorisés dans la file d'attente dans un ordre de réception/d'accès.

6. Ensemble selon l'une quelconque des revendications précédentes, l'ensemble comprenant en outre des moyens de lecture ou de sortie de file d'attente de données de la mémoire, les moyens de lecture comprenant des moyens de délivrance de troisièmes informations relatives à une ou plusieurs adresses des moyens de mémorisation, dont les données ont été lues/sorties de file d'attente.

7. Ensemble selon les revendications 4 et 6, dans lequel l'unité de commande est apte à conserver, pour chaque file d'attente, un pointeur d'écriture identifiant une adresse suivante à laquelle ajouter des données et un pointeur de lecture identifiant une adresse suivante à lire/sortir de la file d'attente,
les moyens de lecture/mise à jour étant aptes à effectuer :
- la mise à jour du pointeur d'écriture de la file d'attente sur la base d'informations de réponse reçues et
- la mise à jour, sur la base de troisièmes informations reçues, du pointeur de lecture de la file d'attente de laquelle des données ont été sorties et
dans lequel les moyens de détermination sont aptes à déterminer l'adresse également sur la base des pointeurs de lecture et d'écriture des files d'attente.

8. Ensemble selon la revendication 7, dans lequel les moyens de lecture/mise à jour sont aptes à effectuer la mise à jour du pointeur d'écriture à une adresse uniquement s'il a été reçu des informations de réponse représentant toutes les adresses entre les pointeurs de lecture et d'écriture.

9. Procédé de fonctionnement d'un appareil comprenant une unité de commande, une pluralité d'éléments de réception et de transfert de données, et une mémoire comprenant une pluralité d'adresses auxquelles des données peuvent être mémorisées, le procédé comprenant :
un élément de réception et de transfert apte à effectuer :
- la réception ou l'accès à un paquet de données,
- la délivrance de premières informations relatives au paquet de données,
- la réception d'une adresse pour la mémorisation d'au moins une partie du paquet de données,
- la mémorisation de l'au moins une partie du paquet de données à l'adresse dans la mémoire,
- la réception des informations de demande et la génération d'informations de réponse, et
- la mémorisation des informations de réponse dans la mémoire à une adresse prédéterminée, les informations de réponse représentant des informations concernant des adresses reçues auxquelles au moins une partie des paquets de données a été mémorisée,
l'unité de commande étant apte à effectuer :
- la réception des premières informations,
- la détermination d'une adresse, la conservation de l'adresse et le retour de l'adresse aux moyens de réception de l'élément de réception et de transfert de données pertinent,
- la délivrance des informations de demande à l'élément de réception et de transfert de données, et
- la lecture, depuis la mémoire, des informations de réponse à partir de l'adresse prédéterminée et la mise à jour d'informations, sur la base des informations conservées, relatives à des adresses dans la mémoire auxquelles les au moins des parties des paquets de données sont mémorisées.

10. Procédé selon la revendication 9, dans lequel l'étape de la mémorisation comprend la mémorisation des informations de réponse uniquement après la mémorisation de l'au moins une partie des paquets de données à toutes les adresses reçues avant de recevoir les informations de demande.

11. Procédé selon la revendication 9 ou 10, dans lequel l'élément de réception et de transfert détermine en outre un point dans le temps de réception/d'accès au paquet de données, les moyens de détermination de temps comprenant des moyens d'horloge, les moyens d'horloge de tous les moyens de détermination de temps étant synchronisés.

12. Procédé selon l'une quelconque des revendications 9 à 11, dans lequel une pluralité de files d'attente sont définies dans la mémoire en tant que groupes distincts d'adresses, l'étape de la détermination comprenant la détermination, à partir des premières informations, d'une file d'attente à laquelle ajouter le paquet de données pertinent, et la sélection d'une adresse à partir des groupes d'adresses de la file d'attente pertinente.

13. Procédé selon la revendication 12, dans lequel l'étape de la détermination comprend la détermination d'une adresse dans la file d'attente déterminée de sorte que les paquets de données soient mémorisés dans la file d'attente dans un ordre de réception/d'accès.

14. Procédé selon l'une quelconque des revendications 9 à 13, comprenant en outre l'étape de la lecture ou de la sortie de file d'attente de données de la mémoire, l'étape de la lecture comprenant la délivrance de troisièmes informations relatives à une ou plusieurs adresses des moyens de mémorisation, dont les données ont été lues/sorties de file d'attente.

15. Procédé selon les revendications 12 et 14, dans lequel l'étape de la détermination comprend la détermination, pour chaque file d'attente, d'un pointeur d'écriture identifiant une adresse suivante à laquelle ajouter des données et d'un pointeur de lecture identifiant une adresse suivante à lire/sortir de la file d'attente,
l'étape de la lecture/mise à jour comprenant :
- la mise à jour du pointeur d'écriture de la file d'attente sur la base d'informations de réponse reçues et
- la mise à jour, sur la base de troisièmes informations reçues, du pointeur de lecture de la file d'attente de laquelle des données ont été sorties et
l'étape de la détermination comprenant la détermination de l'adresse également sur la base des pointeurs de lecture et d'écriture des files d'attente.

16. Procédé selon la revendication 15, dans lequel l'étape de la détermination comprend la mise à jour du pointeur d'écriture à une adresse uniquement s'il a été reçu des informations de réponse relatives à toutes les adresses entre les pointeurs de lecture et d'écriture.
